# EUROPEAN PATENT APPLICATION

(11) **EP 1 814 015 A1**
(43) Date of publication of application: **01.08.2007**
(21) Application number: 06001836.3
(22) Date of filing: 30.01.2006
(51) Int. Cl.: G06F 1/26, H02J 7/00

(54) **Multifunctional charger device**

(71) Applicant: Samya Technology Co., Ltd., Taoyuan City Taoyuan Country 330 (TW)
(72) Inventor: Yang, Fu-I, Taoyuan City Taoyuan Country 330 (TW)
(74) Representative: Casalonga, Axel

(57) **Abstract**

A four-in-one mobile phone charging stand including a stand body having a first charging groove (11) for charging a specific type mobile phone (30) in a vertical position and a second charging groove (12) for charging or discharging one or two separable batteries (20) in a horizontal position; a charging circuit (13) positioned within the stand body (10) and adapted to control the input DC current, the charging circuit (13) having a first charging loop (I) relative to the first charging groove (11) as well as a second charging loop (II) relative to the second charging groove (12) so that either of them can be selected for performing the charging process; a DC TO DC voltage booster circuit (14) coupled to the second charging groove (12) for boosting the output voltage of the batteries (20) in the second charging groove (12) from 1.5~3V DC to 4.5~9V DC, thereby creating a third charging loop (III) relative to the first charging groove (11); and a switching circuit (15) adapted to control either the first charging loop (I) or the third charging loop (III) in such a way that the mobile phone in the first charging groove can be charged. Therefore, the mobile phone charging stand of the invention has the four functions of mobile phone charging stand, charger of secondary battery, non-stop charger, and the emergency power supply.

## Description

The invention relates to a four-in-one mobile phone charging stand, and more particularly to a charging stand, which has a four-in-one combined structure from mobile phone charging set, charger of secondary battery, non-stop charger and emergency power supply.

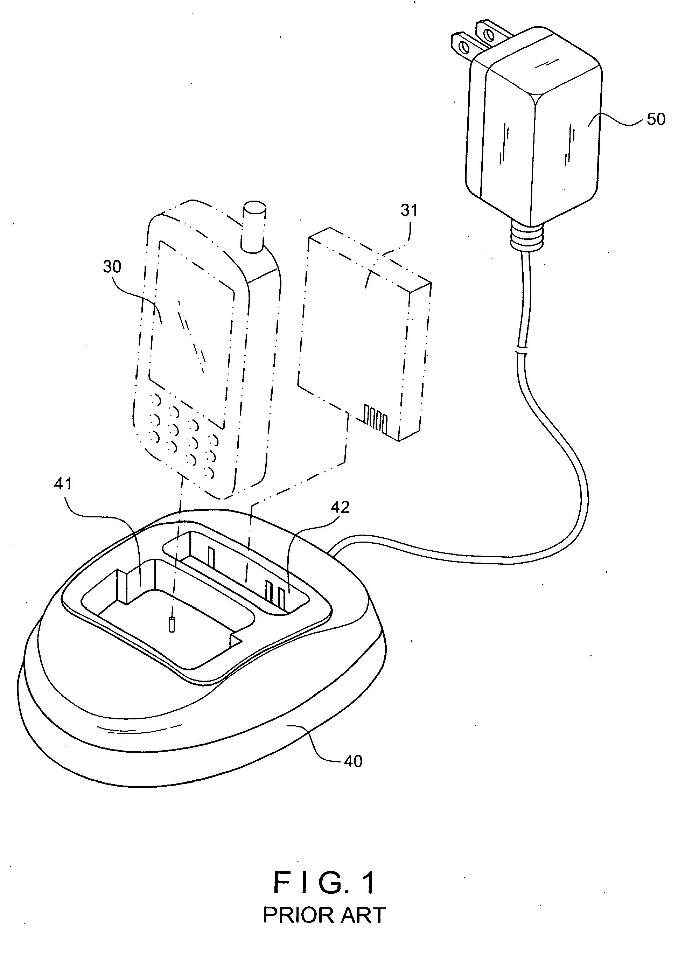

Generally, the mobile phone will be charged in the charging stand 40 as shown in FIG. 1, but most commonly used charging stands 40 have a charging groove 41 for mobile phone 30, in which the charging circuit in the charging stand 40 (not shown) can charge the mobile phone 30 in the charging groove 41. Moreover, another charger stand 40 includes a slim charging slot 42 for lithium batteries positioned behind the charging groove 41 for the mobile phone. The charging circuit in the slim charging slot 42 is identical with the one in the charging groove 41 and it is only used to charge the lithium battery 31 in the slim charging slot 42. When no socket are available for connection of a mains adapter 50, neither the mobile phone charging groove 41 nor the lithium battery slim charging slot 42 in the charging stand 40 can be connected to the DC Charging source. Hence, the charging stand 40 is useless.

Secondly, with the development of 3G mobile phones, the holder can receive video information, news or send important information all the time with it. However, in the condition that the power of mobile phone battery almost runs out, and no emergency power supply is available, the communication will be interrupted and the holder suffers great lost. In this time, even the spare lithium battery 31 1 is nearby, he cannot change the battery when receiving information, because the change of the lithium battery 31 will terminate the power supply and the reception cannot be continued. Thus, another kind of trouble appears.

In addition to the mobile phone, other 3C products such as digital camera, MP3, PDA are more and more popular. Those 3G products normally use the AA/3 size or AAA/4 size batteries for the power source. If the batteries can only be utilized one time and must be thrown away after consumption, the operating cost will be kept in relatively high level. Meanwhile, many environmental problems will arise. Therefore, the application percent of secondary batteries like Nickel Metal Hydride battery (Ni-MH) is relatively high. Though some 3G products can charge this secondary battery by themselves, another charger should be bought to charge the spare secondary battery, if the spare battery is available, so that the product can be used at any time. In this way, the operating cost will be increased and the cluttered cables of the chargers will take up much space.

Taking the shortcomings of the commonly used mobile phone charger stand into account, which cannot satisfy the current demands, the invention focuses on research and innovation to settle the above-mentioned problems.

A primary object of the invention to provide a four-in-one mobile phone charging stand, in which a secondary battery charger based on the originally existing charging circuit is able to charge the secondary battery. Furthermore, when no sockets are available for the connection of the secondary battery charger in case of emergency, primary batteries can be put into the battery chamber. With the help of voltage output of 1.5~3V DC, the mobile phone within the charging groove can be charged by the DC TO DC voltage booster circuit in the stand body in this emergency condition. Therefore, the four combined functions of mobile phone charging stand, charger of secondary battery, non-stop charger and the emergency power supply can be realized in one charging stand.

Another object of the present invention to provide a four-in-one mobile phone charging stand that features the fairly small size and the carrying convenience. Meanwhile, it can serve as the receptacle for the 3G mobile phone, no matter whether the mobile phone is charged or not, and it is convenient to check the displayed contents on the screen and it is not necessary to take the phone in hand, so that the ergonomics and practicalness can be ensured.

In order to reach the above-mentioned objects, the four-in-one mobile phone charging stand includes:
a) a stand body having a first charging groove for charging a specific type mobile phone in a vertical position and a second charging groove for charging or discharging one or two separable batteries in a horizontal position;
b) a charging circuit positioned within the stand body and adapted to control the input DC current, the charging circuit having a first charging loop relative to the first charging groove as well as a second charging loop relative to the second charging groove so that either of them can be selected for performing the charging process;
c) a DC TO DC voltage booster circuit coupled to the second charging groove for boosting the output voltage of the batteries in the second charging groove from 1.5~3V DC to 4.5~9V DC, thereby creating a third charging loop relative to the first charging groove ; and
d) a switching circuit adapted to control either the first charging loop or the third charging loop in such a way that the mobile phone in the first charging groove can be charged.

FIG. 1 is a perspective view of a conventional mobile phone charging stand;
FIG. 2 is a perspective view of a preferred embodiment of the invention;
FIG. 3 is a top view of the preferred embodiment of the invention;
FIG. 4 is a side view of the preferred embodiment of the invention;
FIG. 5 is a circuit block diagram of the preferred embodiment of the invention;
FIG. 6 is a circuit block diagram of the preferred embodiment of the invention; and
FIG. 7 is a perspective view of the mobile phone in accordance with the invention in charging status.

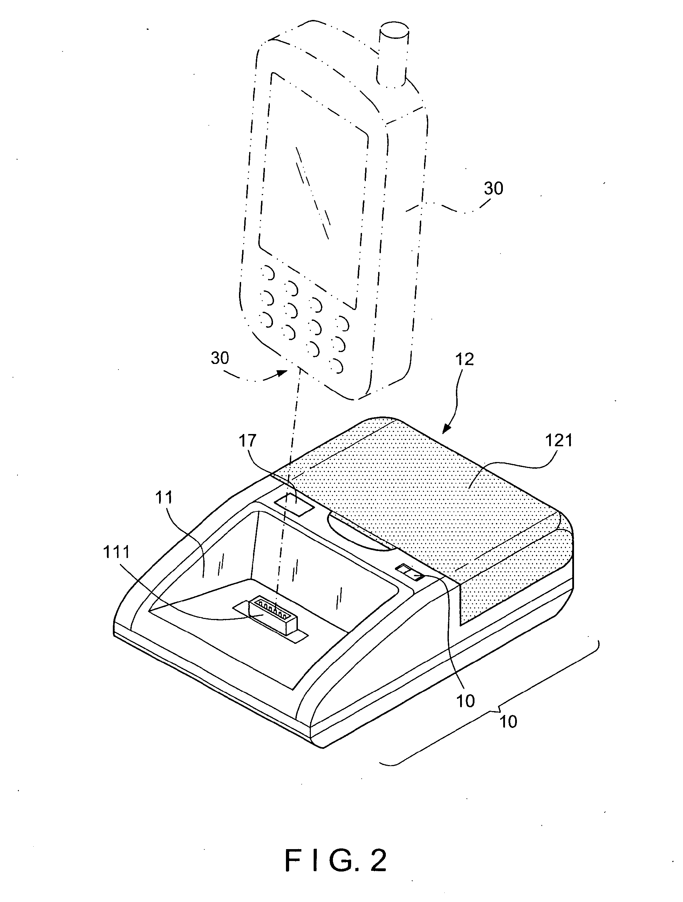

Firstly, referring to FIGS. 2 through 5. a multi-functional charging stand in accordance with a preferred embodiment of the invention includes a stand body 10, a charging circuit 13, a DC TO DC voltage booster circuit 14, and a switching circuit 15.

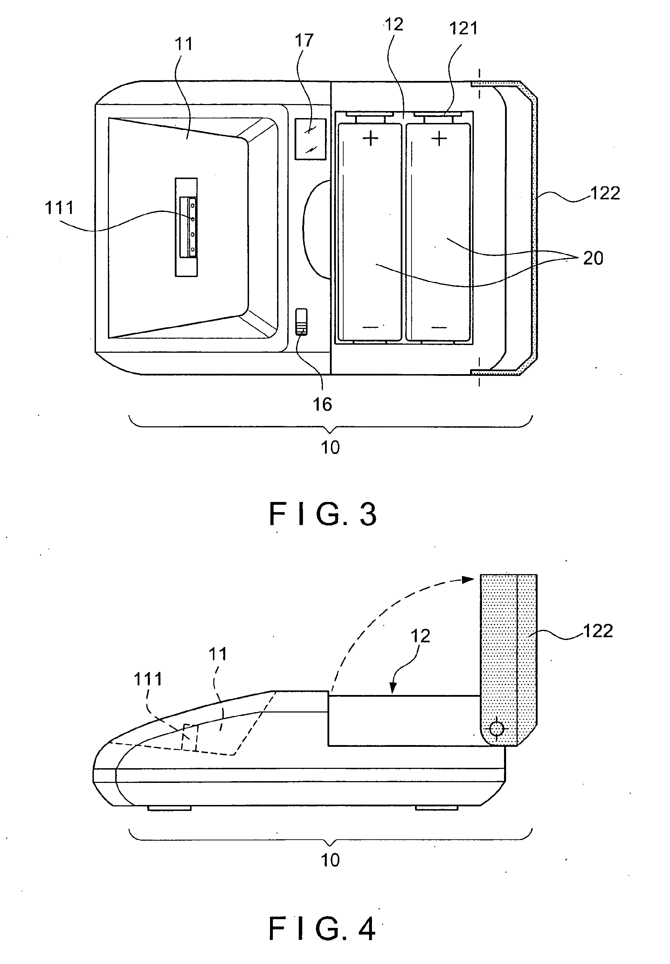

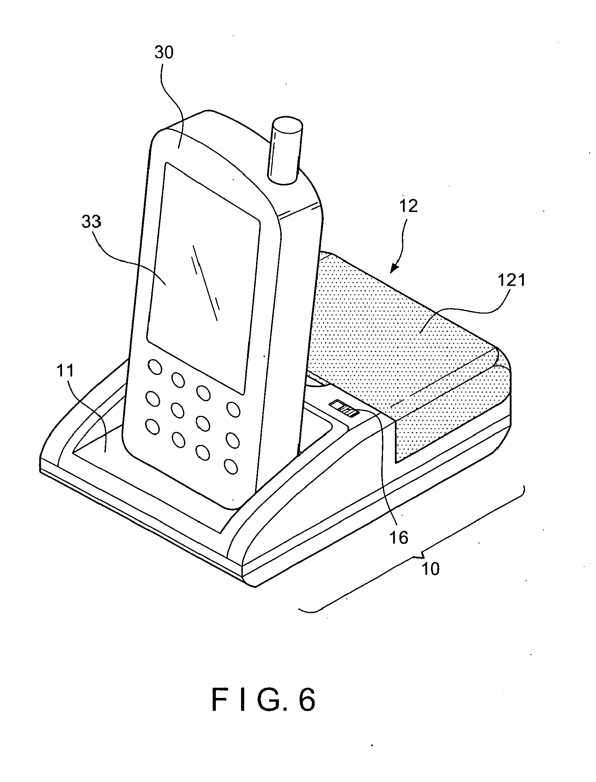

The stand body 10 has a first charging groove 11 that is especially designed for charging a specific type mobile phone 30 in a vertical position, and a second charging groove 12, as shown FIG. 3, for charging one or two separable batteries 20 in a horizontal position (see FIG. 3). Furthermore, the bottom of the first charging groove 11 is slightly tilted toward the rear side thereof, and it includes a convex connector 111 corresponding to a charging slot 32 of the mobile phone. In this way, the mobile phone 30 can be plugged in for establishing electric contact. As shown in FIG. 6, the mobile phone 30 is slightly tilted at a certain angle toward the rear side of the stand body 10 so that it is easier for the user to watch the video information on a display unit 33. As shown in FIG. 3, a plurality of conducting terminals 121 for establishing contact to terminals of the batteries 20 are disposed within the second charging groove 12. In addition, as shown in FIG. 4, the second charging groove 12 includes a hinged cover 122. The cover type is variable and should not be restricted thereto. It can be a covering design or a drawing-off one. Of course, this cover can be removed to keep the charging stand in an open state.

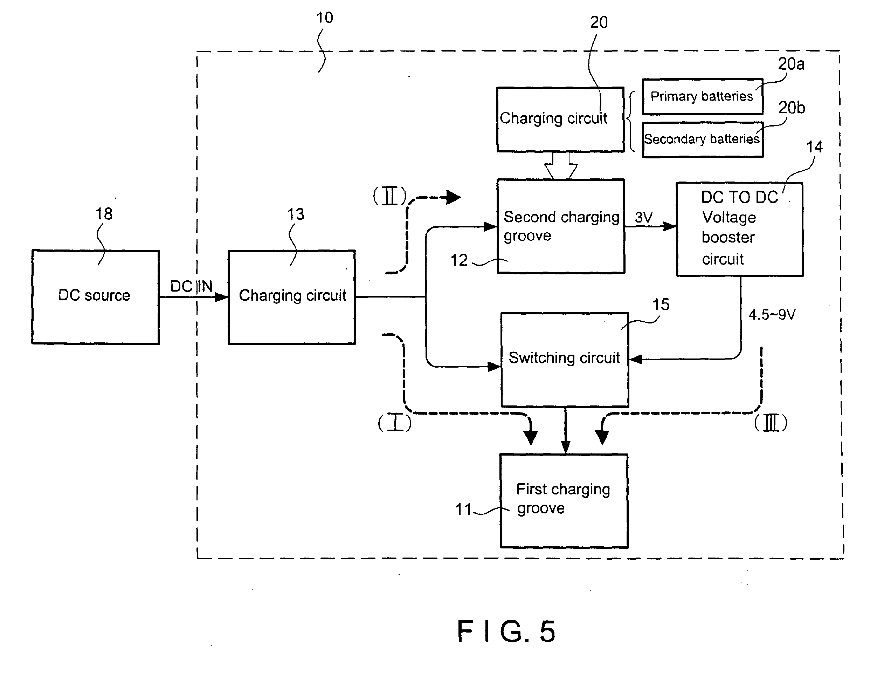

As shown in FIG. 5, the charging circuit 13 is positioned within the stand body 10. In comparison to the charging circuit of the conventional charging stand 40, as shown in FIG. 1, which simply supplies charging voltage to the charging groove 41 for the mobile phone 30 or to the slim charging slot 42 for lithium batteries, the charging circuit 13 in accordance with the invention includes a first charging loop I relative to the first charging groove 11 as well as a second charging loop II relative to the second charging groove 12. In this way, it is optional for the operator to charge individually or together.

The DC TO DC voltage booster circuit 14 is coupled to the second charging groove 12 for boosting the output voltage of the batteries 20 in the second charging groove 12 from 1.5~3V DC to 4.5~9V DC, thereby creating a third charging loop III relative to the first charging groove 11. The separable batteries 20 include two primary batteries and rechargeable secondary batteries, and preferably in size of AA/3 or AAA/4. The size is not limited to the above-mentioned ones because those two types are widely used for 3G products. However, the output voltage of two batteries 20 is only about 3V 1.5x2, and the normal charging source for mobile phone needs the voltage about 4.5~9V. Thus, the invention takes advantage of the DC TO DC voltage booster circuit 14 to increase the voltage to the desired value, thereby creating the third charging loop III for the first charging groove 11 to undergo the charging process in case of emergency.

The switching circuit 15 is adapted to control either the first charging loop I or the third charging loop III such that the mobile phone in the first charging groove 11 can be charged. The above-mentioned switching circuit 15 consists of either a manual control switch or an automatic control switch. For the manual control switch 16, just as it is shown in FIGS. 2, 3 and .5, a slide switch or a push-button switch is mounted on the surface of the stand body 10, which is operated manually to select either the first charging loop I supplies DC source 18 to perform the charging process in the first charging groove 11 or the third charging loop III, which is created by the saturated charged secondary batteries 206 in the second charging groove 12, to perform the charging process in the first charging groove 11. Generally, when the outside power source is available, the first charging groove 11 should be charged by the first charging loop I. When it is not possible to obtain the outside power source, the saturated charged secondary battery 20b in the second charging groove 12 can be used as the charging power source for the mobile phone 30. Moreover, the switching circuit 15 further includes an automatic control switch. The charging priority can be predetermined by the electronic devices and circuits. In other words, by means of an automatic switching, the third charging loop III will take up the task to charge the mobile phone in the first charging groove 11 when no current is present in the first charging loop I. Meanwhile, this automatic control switch can be integrated in this charging circuit 13 or in other circuit boards. Other designs are also possible.

Moreover, this switching circuit 15 has a display unit 17 on the stand body 10 to indicate the charging status. This display unit 17 consists of either LCD or LED.

The detailed circuit diagrams of the above mentioned charging circuit 13, DC TO DC voltage booster circuit 14 and the switching circuit 15 and so on are not the main points of the invention and will not be thoroughly described.

Therefore, with the help of above-mentioned technical methods, this invention can use the charging circuit 13 to charge just like a normal charging stand the mobile phone 30 in the first charging groove 11, when the input of DC power source is connected. This charging stand can also charge the secondary batteries 20b in the second charging groove 12 at the same time and makes itself as a battery charging device. Besides, when the outside power source is unavailable for connection of the stand body 10, when the power source is interrupted or when it is carried outside, the secondary batteries 20b in the second charging groove 12 can work like a non-stop charger. When the user need to charge the mobile phone urgently outside and can not find a mains socket and the electricity of the secondary batteries 20b runs out, the user needs only to buy two pieces of primary batteries 20a like the alkaline batteries in the shop nearby and put them into the second charging groove 12, an emergency power supply can be available in such a way that the third charging loop III supplies the charging source to the first charging groove 11 for the charging of the mobile phone 30. Hence, this invention integrates the four functions of normal charging stand, charger for the secondary batteries, non-stop charger and the emergency power supply in one charging stand.

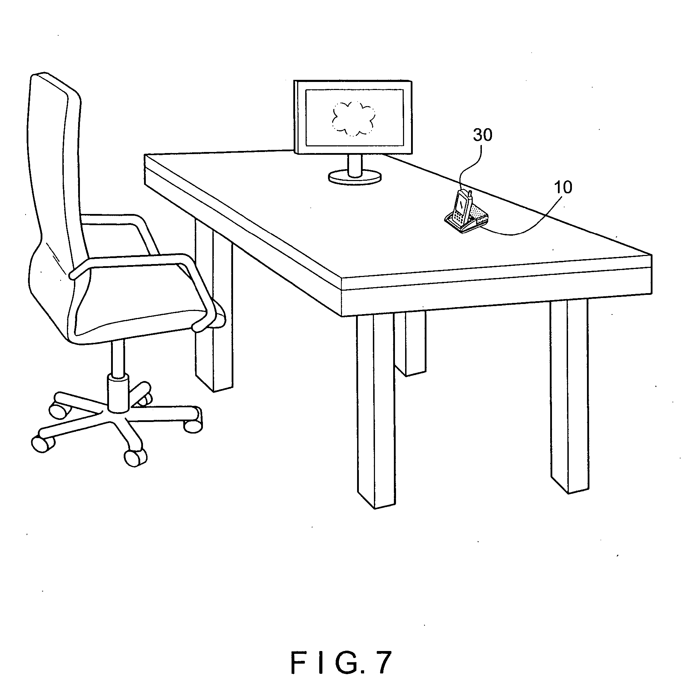

In addition, the size of this invention is similar to the normal charging stand. Therefore, the user has no trouble to carry if he goes for a meeting or places it on the table as shown in FIG. 7. The stand body 10 can not only supply the needed power source all the time for the 3G mobile phone 30 and assure the reception without interruption. Besides, it also can be applied as the placing seat of 3G mobile phone. Then the phone can be charged and it can receive the video information simultaneously. The user does not need to take the phone in hand, it is very convenient and practical to get the power source of mobile phone and the ergonomics can also be achieved.

Many changes and modifications in the above-described embodiment of the invention can, of course, be carried out without departing from the scope thereof. Accordingly, to promote the progress in science and the useful arts, the invention is disclosed and is intended to be limited only by the scope of the appended claims.

## Claims

1. A four-in-one mobile phone charging stand, comprising:
a) a stand body (10) having a first charging groove (11) for charging a specific type mobile phone (30) in a vertical position and a second charging groove (12) for charging or discharging one or two separable batteries (20) in a horizontal position;
b) a charging circuit (13) positioned within the stand body (10) and adapted to control the input DC current, the charging circuit having a first charging loop (I) relative to the first charging groove (11) as well as a second charging loop (II) relative to the second charging groove (12) so that either of them can be selected for performing the charging process;
c) a DC TO DC voltage booster circuit (14) coupled to the second charging groove (12) for boosting the output voltage of the batteries (20) in the second charging groove (12) from 1.5~3V DC to 4.5~9V DC, thereby creating a third charging loop (III) relative to the first charging groove (11); and
d) a switching circuit (15) adapted to control either the first charging loop (I) or the third charging loop (III) in such a way that the mobile phone (30) in the first charging groove (11) can be charged.

2. The four-in-one mobile phone charging stand as recited in claim 1 wherein the bottom of the first charging groove (11) is tilted toward the rear side thereof, and wherein the first charging groove includes a convex connector (111) corresponding to a charging slot of the mobile phone.

3. The four-in-one mobile phone charging stand as recited in claim 1 wherein a plurality of conducting terminals (121) for establishing contact to terminals of the batteries (20) are disposed within the second charging groove (12).

4. The four-in-one mobile phone charging stand as recited in claim 1 wherein the second charging groove (12) includes a cover (122).

5. The four-in-one mobile phone charging stand as recited in claim 1 wherein the separable batteries (20) consisting of the normal primary batteries (20a) in size of AA/3 or AAA/4 and the rechargeable secondary batteries(20b).

6. The four-in-one mobile phone charging stand as recited in claim 1 wherein the switching circuit (15) is selected from a group consisting of a manual control switch (16) and an automatic control switch.

7. The four-in-one mobile phone charging stand as recited in claim 6 wherein the manual switch (16) is disposed on the surface of the stand body (10) and selected from a group consisting of a slide switch and a push-button switch.

8. The four-in-one mobile phone charging stand as recited in claim 6 wherein the automatic control switch is embedded in the charging circuit (13).

9. The four-in-one mobile phone charging stand as recited in claim 6 wherein the switching circuit (15) includes a display unit (17) on the surface of the stand body (10) for indicating the charging status.

10. The four-in-one mobile phone charging stand as recited in claim 9 wherein the display unit (17) is selected from a group consisting of LCD and LED.
